# EUROPEAN PATENT APPLICATION

(11) **EP 2 254 251 A1**
(43) Date of publication of application: **24.11.2010**
(21) Application number: 09290373.1
(22) Date of filing: 19.05.2009
(51) Int. Cl.: H04B 1/00, H04W 16/14

(54) **Application-agnostic communication system and method**

(71) Applicant: Alcatel Lucent, 75008 Paris (FR)
(72) Inventor: Pascht, Andreas, 73614 Schorndorf (DE); Bitzer, Thomas, 73614 Schorndorf (DE); Bohn, Thomas, 70372 Stuttgart (DE); Machinal, Robert, 70173 Stuttgart (DE); Matz, Ralf, 71566 Althütte (DE)
(74) Representative: Kohler Schmid Möbus

(57) **Abstract**

The communication system (1) presented here comprises a base transceiver station (BTS) equipped with a scanning receiver (10) and an air interface, i.e. an antenna (AN). The scanning receiver (10) is configured for a scanning operation (SC) for scanning a broad RF communication frequency range of RF signals received through the antenna (AN), monitoring means (11) configured for monitoring the scanned RF communication frequency range, detecting means (12) for detecting actually occupied frequency resources (OR) and free, momentarily unused chunks (FR) of the scanned broad frequency range, scheduling means (13) for scheduling and allocating RF resources and occupying one or more of the detected unused chunks (FR) and adapting means (14) for adapting the communication from/to each terminal (T) on a dedicated standard and on at least one of the now occupied frequency chunks depending on a specific standard and capability of the terminal (T) and type of the communication service as desired by the user (U).

## Description

### Field of the Invention

The present invention relates to an application-agnostic communication system and method able to increase the flexibility in the interworking of all kinds of telecommunication services and which can use the frequency spectrum in wireless applications and reduce the power consumption needed to serve customers with telecommunication services.

### Description of Related Art

Nowadays communication systems are all special solutions in several aspects:
- special transmission technology (wire-line/wireless, standards, frequency bands)
- special operators
- special applications.

As a result, several communication systems are installed in the same geographical area and operating in parallel. Specific communication load is today handled with a dedicated system but not unified across different communication systems. This leads to non-optimal usage of the communication resources and thus energy resources. For example, operators of emergency systems use totally different equipment and frequency bands than operators of public telecommunications. Even operators of public telecommunications use many different standards in different frequency bands. Until now, there is no general infrastructure at all for purposes like traffic management or medical monitoring.

Since existing communication services are dedicated to one certain purpose, there is no possibility to use the equipment and energy in a cost-effective way. Even more, frequency spectrum is a limited resource and hence, it will be more and more difficult to introduce new services for traffic management, medical monitoring, remote control services and so on.

Because telecommunication becomes a more and more important part of the daily life it is very desirable to increase the flexibility in the interworking between all kinds of telecommunication services to economically use the frequency spectrum in wireless applications and to reduce the power consumption needed to serve customers with telecommunication services.

### Summary of the Invention

In view of the above, the invention aims to a general and universal infrastructure for communication capable of handling all kinds of communication services for any kind of usage, e.g.:
- mobile communication (speech, internet access),
- broadcast services,
- traffic management,
- medical monitoring,
- emergency services,
- remote control services.

According to a first essential aspect of the invention, the object is solved by a communication system comprising a base transceiver station configured to handle RF communication with at least one terminal according to various RF communication standards and services over an air interface, the base transceiver station being equipped with a scanning receiver having: monitoring means configured for monitoring a broad RF communication frequency range of received RF signals; detecting means configured for detecting free, momentarily unused chunks of the monitored RF communication frequency range; scheduling means configured for scheduling and allocating RF resources and for occupying one or more of the detected unused chunks depending on physical RF communication conditions and on user-specific conditions, and adapting means configured for adapting the communication from/to each terminal to a dedicated standard and to at least one of the now occupied frequency chunks depending on a specific standard and capability of the terminal and type of the communication service.

This communication system can interconnect any user to any source of information or service. By reducing the number of used communication systems, the total traffic load can be handled in an optimized way. This leads to significant improvement of the overall frequency spectrum and energy efficiency for communication.

According to an advantageous development of the present communication system each base transceiver station is further equipped with interaction means coupled with the scanning receiver and configured to interact with at least one wireless access point neighboring to said base transceiver station and also equipped with said monitoring, detecting, scheduling and adapting means for transmitting to said neighbor access point first information about free frequency resources which can be exploited by said neighbor access point and further configured to receive from said neighbor access point second information about occupied RF resources and RF load conditions.

The broad RF communication frequency range monitored by said monitoring means by scanning it with a scanning receiver preferably has a lower limit frequency of 500 MHz and a higher limit frequency of 5 GHz, thus spans a frequency range of 4,5 GHz. Free, momentarily unused chunks of it are detected by the detecting means and can be occupied by the scheduling means depending on physical RF communication conditions and on user-specific conditions. In this communication system the physical communication conditions comprise channel conditions and a density of the base transceiver stations at a specific location thereof. In the present communication system the user-specific conditions may comprise at least one of the conditions:
- user-required applications,
- demand of cost with data rate and/or high quality connection demand of the user.

According to a second important aspect the present invention provides a method for offering a communication service to a terminal, said method comprising: providing a base transceiver station with a radio air interface; receiving and monitoring at said radio air interface a broad RF communication frequency range; detecting free, momentarily unused chunks of the monitored RF communication frequency range; scheduling and allocating RF resources and occupying one or more of the detected unused chunks depending on physical RF communication conditions and on user-specific conditions, and adapting the communication from/to the terminal to a dedicated standard and to at least one of the now occupied frequency chunks depending on a specific standard and capability of the terminal and a type of the communication service.

The present invention further encompasses a communication network and a base transceiver station, said base transceiver station being configured to handle RF communication with at least one terminal according to various RF communication standards and services over an air interface, the base transceiver station being equipped with a scanning receiver having: monitoring means configured for monitoring a broad RF communication frequency range of received RF signals; detecting means configured for detecting free, momentarily unused chunks of the monitored RF communication frequency range; scheduling means configured for scheduling and allocating RF resources and for occupying one or more of the detected unused chunks depending on physical RF communication conditions and on user-specific conditions, and adapting means configured for adapting the communication from/to each terminal to a dedicated standard and to at least one of the now occupied frequency chunks depending on a specific standard and capability of the terminal and a type of the communication service.

Further the present invention encompasses a computer program product comprising code means for performing the steps of the above communication method.

Since the present communication system and method is not necessarily owned by a certain operator or company, this allows any kind of dynamic resource distribution among any kind of services providers. Totally new business cases can be created, comprising e.g. traffic control, medical monitoring and other services for which a dedicated network would be cost-ineffective. Further the uncoordinated operation of different wireless system inherently disappears with all its resulting high regularity demands. As a consequence, the security of transmissions with high priority needed (e.g. emergency calls) can be improved while relaxing transmission requirements. This leads to further optimization of the energy efficiency. The research for optimized usage of the frequency spectrum has furthermore a high impact on the evolution of telecommunication standards.

### Brief Description of the Drawings

A basic exemplary embodiment of the inventive communication system will be described in detail with reference to the following figures, wherein:
- Fig. 1: schematically illustrates an embodiment of the present application-agnostic communication system partly as a functional block diagram operating to monitor a broad RF spectrum in order to detect free frequency resources, and
- Fig. 2: illustrates the embodiment of the present application-agnostic communication system operating to allocate and occupy one detected heretofore unused chunk of the monitored RF spectrum.

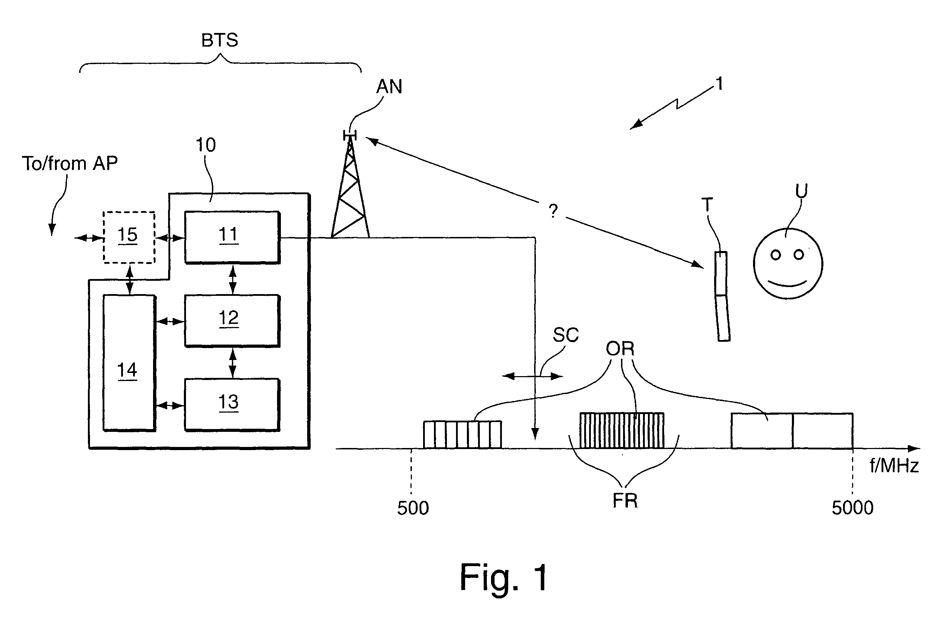

The exemplary embodiment depicted in **Fig. 1** partly as a functional block diagram illustrates one operation of the present communication system 1. The communication system 1 as shown in Fig. 1 comprises a base transceiver station BTS configured to handle RF communication with at least one user terminal T according to various RF communication standards and services over an air interface. The base transceiver station BTS is equipped with a scanning receiver 10 to which an antenna AN (radio head) is connected.

The scanning receiver 10 includes monitoring means 11 configured for monitoring a broad RF communication frequency range, e.g. a frequency range from 500 MHz to 5 GHz. The scanning action of the scanning receiver 10, i.e. the monitoring means 11 is indicated by the double-sided arrow SC. The scanning receiver 10 further includes detecting means 12 configured for detecting free momentarily unused chunks FR of the monitored RF communication frequency range and to detect and determine occupied resources OR associated to actually used chunks of the monitored RF communication frequency range.

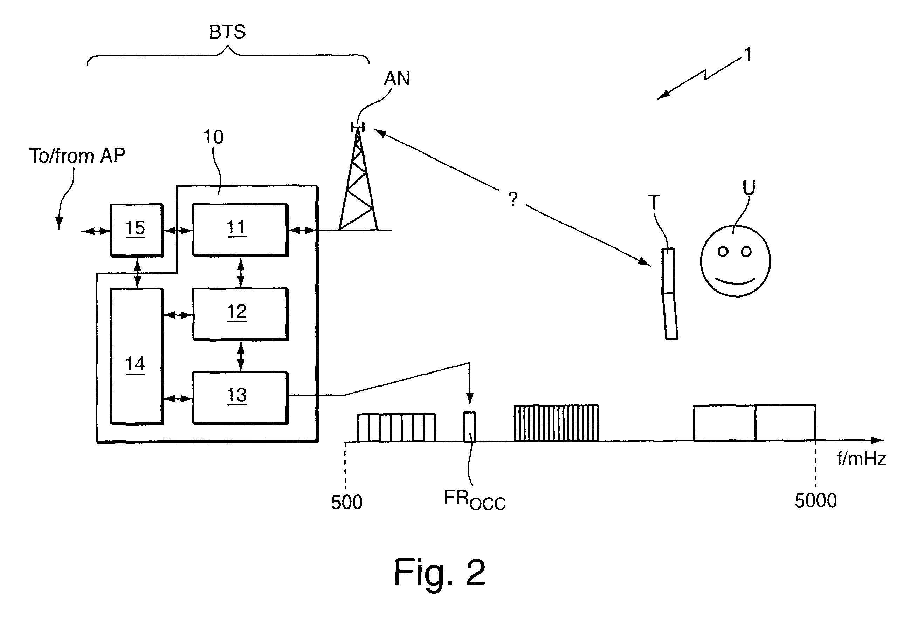

Further **Fig. 2** schematically illustrates an allocating and occupying action AL of a scheduling means 13 being part of the scanning receiver 10 and configured for scheduling and allocating resources and occupying one or more of the detected unused chunks FR depending on physical RF communication conditions and on conditions specific to the user U. Adapting means 14 are included in the scanning receiver 10 of the base transceiver station BTS and configured for adapting the communication from/to each terminal T to a dedicated standard and to at least one of the now occupied frequency chunks FR_{OCC} depending on a specific standard (UMTS, GSM, ...) and capability of the terminal T and a type of the communication service (voice service, data service) demanded by the user U.

As further shown in Figs. 1 and 2, each base transceiver station BTS is optionally equipped with interaction means 15 (a box indicated by broken lines) coupled with the scanning receiver 10 and configured to interact with at least one wireless access point AP which may be another base transceiver station BTS neighboring to the first actual base transceiver station BTS. The wireless access point AP (not shown in detail in Figs. 1 and 2) may be equipped with the same components as the actual base transceiver station BTS, i.e. with the monitoring means, detecting means, scheduling means, adapting means of a scanning receiver and with the interaction means. The interaction means 15 of the actual base transceiver station BTS is configured for transmitting to said neighbor access point AP first information about free frequency resources FR which can be exploited by said neighbor access point AP and further to receive from said neighbor access point AP second information about the load conditions and RF resources OR already occupied by the neighbor access point AP.

As described above, the present communication system is equipped with the scanning receiver 10 configured for effectively monitoring the broad frequency range, e.g. ranging from 500 to 5000 MHz, to detect the actually occupied frequency resources OR and unused chunks, that is free frequency resources FR which can be occupied by the scheduling means 13 depending on physical conditions of the channel, the density of the sites of the base transceiver stations BTS (urban, city, etc.), the user's application demand (voice service, data service) and further demands of the user (low cost with data rate, high quality connection which is very broadband). If there are two free sections in the entire frequency bands, the lower section can be selected because of a wider range between the antennas of the base transceiver station BTS and a mobile device, i.e. the terminal T.

After termination of the service to the terminal T of the user U, the momentarily occupied frequency resources FR_{OCC} are freed again and can be exploited by another base transceiver station BTS nearby which also has the sophisticated structure of the present communication system, e.g. the neighbor wireless access point AP.

The above description teaches the skilled person that the present communication system and method fulfills several requirements, namely monitoring the radio environment, i.e. the broad RF range, adaptation to all needed kinds of standards and frequency bands depending on the served terminal T, smart managing and scheduling of the radio resources, that is the allocation of the frequency band and standards depending on the type of application and smart interworking with neighboring wireless access points AP, e.g., a neighboring base transceiver station BTS.

The present communication system described above achieves a general and universal infrastructure for communication and is capable of handling all kinds of communication services for any kind of usage, e.g. mobile communication (speech, internet access), broadcast services, traffic management, medical monitoring, emergency services, remote control services.

The present communication system and method can interconnect any user to any source of information or service by reducing the number of different communication systems heretofore used. The total load of communication traffic can be handled in an optimized way. This leads to a significant improvement of the utilization of the overall frequency spectrum and largely increases energy efficiency for communication. Similar to a road network which is not dedicated to certain cars or trucks, the communication infrastructure of the present communication system is application-agnostic and thus generally accessible.

The skilled person will easily grasp from the above description of the present communication system and method that the invention also encompasses a base transceiver station of a communication network and a communication network having at least one such base transceiver station. That is, the present communication system and method encompasses new architectures for backbone networks and access points.

It is easily understandable from the above description that the inventive communication system, base transceiver station and communication network as presented here is not necessarily owned by a certain operator or company. This allows any kind of dynamic resource distribution among any kind of service providers. Totally new business cases can be created, comprising e.g. traffic control, medical monitoring and other services for which a dedicated network as used until now would be ineffective.

## Claims

1. A communication system (1) comprising a base transceiver station (BTS) configured to handle RF communication with at least one terminal (T) according to various RF communication standards and services over an air interface (AN), the base transceiver station (BTS) being equipped with a scanning receiver (10) having:
- Monitoring means (11) configured for monitoring a broad RF communication frequency range of received RF signals;
- Detecting means (12) configured for detecting free, momentarily unused chunks (FR) of the monitored RF communication frequency range;
- Scheduling means (13) configured for scheduling and allocating RF resources and for occupying one or more of the detected unused chunks (FR) depending on physical RF communication conditions and on user-specific conditions, and
- Adapting means (14) configured for adapting the communication from/to each terminal (T) to a dedicated standard and to at least one of the now occupied frequency chunks (FR_{OCC}) depending on a specific standard and capability of the terminal (T) and a type of the communication service.

2. The communication system as claimed in claim 1, wherein each base transceiver station (BTS) is further equipped with interaction means (15) coupled with the scanning receiver (10) and configured to interact with at least one wireless access point (AP) neighboring to said base transceiver station (BTS) and also equipped with said monitoring, detecting, scheduling and adapting means (11 to 14) for transmitting to said neighbor access point (AP) first information about free frequency resources which can be exploited by said neighbor access point (AP) and further configured to receive from said neighbor access point (AP) second information about occupied RF resources and RF load conditions.

3. The communication system as claimed in claim 1, wherein the broad RF communication frequency range monitored by said monitoring means has a lower frequency limit of 500 MHz and a higher frequency limit of 5GHz.

4. The communication system as claimed in claim 1, wherein the physical communication conditions comprise channel conditions and a density of the base transceiver stations (BTS) at a specific location thereof.

5. The communication system as claimed in claim 1, wherein the user-specific conditions comprise at least one of following conditions:
- User-required applications, demand of cost with data rate and/or a high quality connection demand of the user.

6. A method for offering a communication service to a terminal (T), said method comprising:
- Providing a base transceiver station (BTS) with a radio air interface (AN);
- Receiving and monitoring at said radio air interface (AN) a broad RF communication frequency range;
- Detecting free, momentarily unused chunks (FR) of the monitored RF communication frequency range;
- scheduling and allocating RF resources and occupying one or more of the detected unused chunks (FR) depending on physical RF communication conditions and on user-specific conditions, and
- adapting the communication from/to the terminal (T) to a dedicated standard and to at least one of the now occupied frequency chunks (FR_{OCC}) depending on a specific standard and capability of the terminal (T) and a type of the communication service.

7. The method as claimed in claim 6, wherein it comprises further steps of interacting with at least one neighbor wireless access point (AP);
- transmitting to said neighbor access point (AP) first information about free frequency resources which can be exploited by said neighbor access point (AP); and
- receiving from said neighbor access point (AP) second information about occupied RF resources and RF load conditions.

8. The method as claimed in claim 6, wherein the broad RF communication frequency range has a lower frequency limit of 500 MHz and a higher frequency limit of 5GHz.

9. The method as claimed in claim 6, wherein the physical communication conditions comprise channel conditions and a density of the base transceiver stations (BTS) at a specific location thereof, and wherein the user-specific conditions comprise at least one of following conditions: User-required application, demand of cost with data rate and/or a high quality connection demand of the user.

10. A base transceiver station (BTS) of a communication network (1), said base transceiver station (BTS) being configured to handle RF communication with at least one terminal (T) according to various RF communication standards and services over an air interface (AN), the base transceiver station (BTS) being equipped with a scanning receiver (10) having:
- Monitoring means (11) configured for monitoring a broad RF communication frequency range of received RF signals;
- Detecting means (12) configured for detecting free, momentarily unused chunks (FR) of the monitored RF communication frequency range;
- Scheduling means (13) configured for scheduling and allocating RF resources and for occupying one or more of the detected unused chunks (FR) depending on physical RF communication conditions and on user-specific conditions, and
- Adapting means (14) configured for adapting the communication from/to each terminal (T) to a dedicated standard and to at least one of the now occupied frequency chunks (FR_{OCC}) depending on a specific standard and capability of the terminal (T) and a type of the communication service.

11. A communication network (1) having at least one base transceiver station (BTS) according to claim 10.

12. The communication network as claimed in claim 11, wherein the at least one base transceiver station (BTS) is further equipped with interaction means (15) coupled with the scanning receiver (10) and configured to interact with at least one wireless access point (AP) neighboring to said base transceiver station (BTS) and also equipped with said monitoring, detecting, scheduling and adapting means (11 to 14) for transmitting to said neighbor access point (AP) first information about free frequency resources which can be exploited by said neighbor access point (AP) and further configured to receive from said neighbor access point (AP) second information about occupied RF resources and RF load conditions.

13. The communication network as claimed in claim 11, wherein the broad RF communication frequency range monitored by said monitoring means has a lower frequency limit of 500 MHz and a higher frequency limit of 5GHz.

14. The communication network as claimed in claim 11, wherein the physical communication conditions comprise channel conditions and a density of the base transceiver stations at a specific location thereof and wherein the user-specific conditions comprise at least one of user-required application, demand of cost with data rate and/or a high quality connection demand of the user.

15. A computer program product comprising code means for performing the steps of the method as claimed in claim 6.
